# EUROPEAN PATENT APPLICATION

(11) **EP 1 069 663 A1**
(43) Date of publication of application: **17.01.2001**
(21) Application number: 00500153.2
(22) Date of filing: 11.07.2000
(51) Int. Cl.: H02G 1/08, H02G 3/06

(54) **Bend pipe of a protection pipes system for electric cables**

(30) Priority: 13.07.1999 ES 9901925 U
(71) Applicant: INTERFLEX S.A., 08110 Montcada I Reixac (ES)
(72) Inventor: Perez de la Heras, Ramon, 08911 Badalona (Barcelona) (ES)
(74) Representative: Ponti Sales, Adelaida

(57) **Abstract**

It comprises two straight tubular sections joined together and formed by moulding; at the line of union of the two straight tubular sections are provided a plurality of appendages or flexible filaments (6) that project from the inner wall of the conduit (3) defined by the elbow (1) and occupy part of the perimeter of said conduit (3).

The risk of damaging the cables that pass inside the elbow is avoided.

## Description

The present invention relates to an elbow of a system of protective tubes for electrical cables.

### BACKGROUND OF THE INVENTION

Known in the art are elbows of systems of protective tubes for electrical cables which comprise two straight tubular sections joined to each other and shaped by moulding. The inner conduit of the elbow, constituted by the two straight sections and the bend joining them, is formed during moulding by means of punches.

In the moulding of the elbow a sharp edge is formed inside the conduit, along the curved line of intersection between the straight tubular sections, since the moulding with punches does not allow to form a rounded surface at the inner part of the angle formed by the elbow. This sharp edge can damage the cables which extend inside the elbow.

In order to avoid this disadvantage, it is usual to remove said sharp edge manually using a scraper or the like, which involves additional manufacturing time which makes the product more expensive.

### DESCRIPTION OF THE INVENTION

With the elbow of the invention the need for the supplementary operation described, as well as the risk of damaging the cables, are avoided.

The elbow of the invention is characterised in that it includes, at the line of union of the two straight tubular sections, a plurality of appendages or flexible filaments that project from the inner wall of the conduit defined by the elbow and occupy part of the perimeter of said conduit.

The plurality of appendages or filaments is obtained by moulding and is formed in the same position where the sharp edge was formed in the prior art, that is, at the line of union of the two straight sections. Thus instead of the sharp edge of the prior art, said plurality of appendages or filaments are formed, and since said sharp edge is not formed in the moulding there is no risk of damaging the cables.

The plurality of appendages or filaments can be formed, for example, by providing corresponding recesses at the ends of the punches which during moulding form the conduits of the straight tubular sections.

From the above it can be seen that the appendages or filaments form a comb-like curtain through which the cables pass. Since said appendages or filaments are flexible, they bend when the cables that pass inside the elbow are pulled upon.

Advantageously, the appendages or filaments have their ends rounded so as to prevent any incision into the cables.

Preferably, the part of the perimeter of the inner conduit of the elbow occupied by the plurality of appendages or filaments comprises the interior zone of the elbow, which is the zone through which the cables tend to pass when they are pulled upon.

Also preferably, and in order to ensure that the cables pass on the curtain of appendages or filaments, the part of the perimeter of the inner conduit of the elbow occupied by the plurality of appendages or filaments comprises an arch exceeding 90°.

### BRIEF DESCRIPTION OF THE DRAWINGS

Other features and advantages of the elbow object of the invention will be clear from the description of a preferred but non-exclusive embodiment, which is illustrated by way of non-restrictive example in the attached drawings, in which:
figures 1 and 2 are views in cross section along a central plane of the elbow of the invention; and
figure 3 is a front view of the elbow.

### DESCRIPTION OF A PREFERRED EMBODIMENT

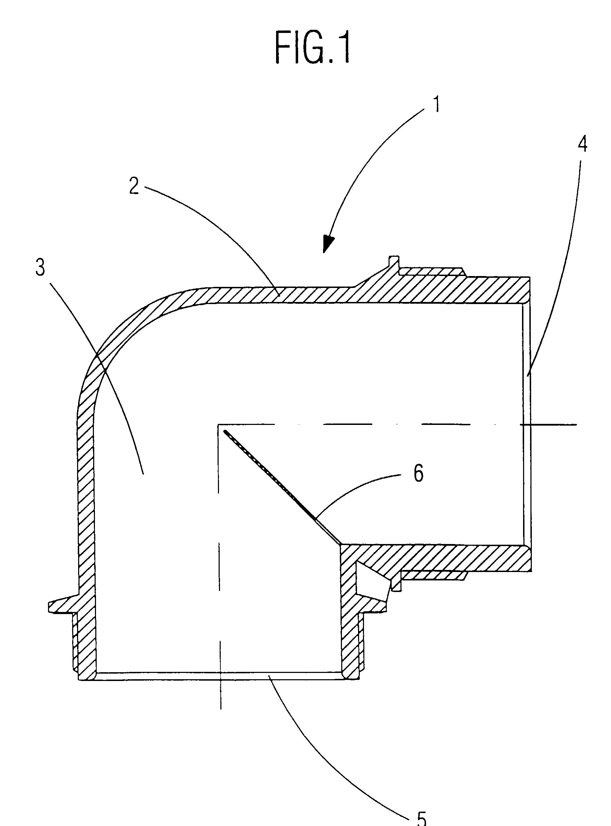

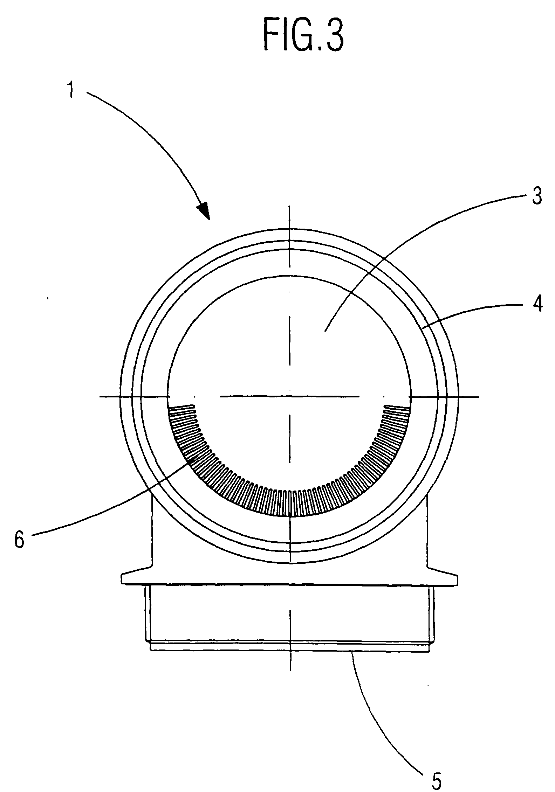

With particular reference to figure 1, it can be seen that the elbow 1 includes a body 2 which forms an inner conduit 3 with an inlet 4 and an outlet 5 arranged and oriented at 90°. Inside, the elbow 1 presents a plurality of flexible appendages or filaments 6 which project from the inner wall of the conduit 3 and which occupy part of the perimeter of said conduit 3; more particularly the filaments 6 are arranged along an arch of about 180° (see figure 3) of a circle in the intersection between the two straight sections of conduit 3. This circle lies in a plane at right angles to the plane defined by the elbow and at 45° with respect to both directions of the straight sections of the conduit.

More particularly, the 180° arch along which the filaments 6 are arranged corresponds to the portion of the circle lying on the inner side of the angle formed by the elbow 1, which could also be called interior zone of the elbow.

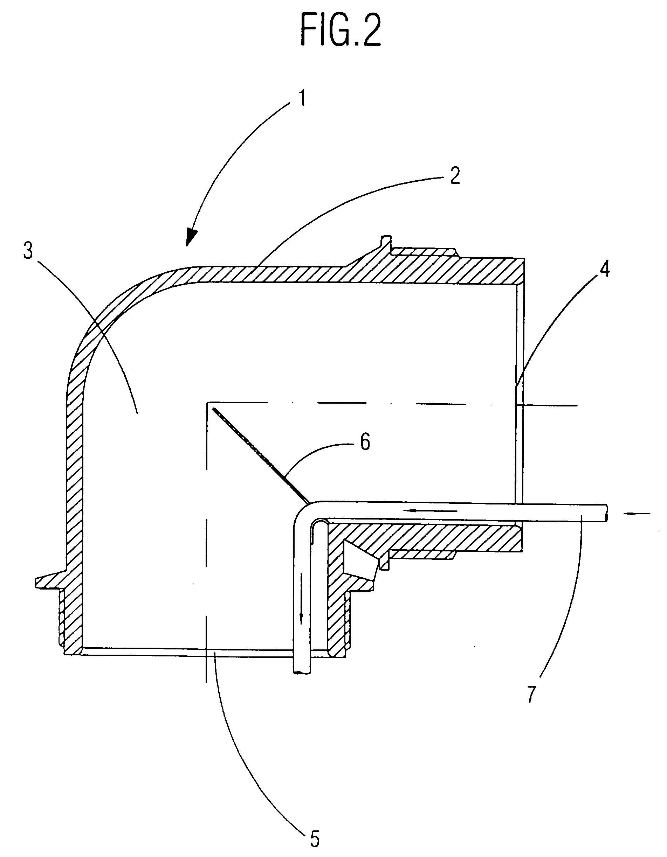

In figure 2 an electrical cable 7 running through the interior of the elbow 1 has been shown schematically. As can be appreciated from this figure, the cable 7 bends the flexible appendages or filaments 6 as it passes inside said elbow 1, damage to the cables by friction against sharp edges being thus prevented.

Figure 3 is especially useful for understanding which is the zone on which the flexible appendages or filaments 6 are distributed inside the elbow 1.

The details and accessory elements and the materials used in the elbow of the invention can be suitably replaced by others that are technically equivalent without departing from the essential nature of the invention or the scope defined by the appended claims.

## Claims

1. An elbow of a system of protective tubes for electrical cables, which comprises two straight tubular sections joined together and formed by moulding, characterised in that it includes, at the line of union of the two straight tubular sections, a plurality of appendages or flexible filaments (6) that project from the inner wall of the conduit (3) defined by the elbow (1) and occupy part of the perimeter of said conduit (3).

2. An elbow as claimed in Claim 1, characterised in that the appendages or filaments (6) have their ends rounded.

3. An elbow as claimed in Claim 1, characterised in that the part of the perimeter of the inner conduit (3) of the elbow (1) occupied by the plurality of appendages or filaments (6) comprises the interior zone of the elbow (1) .

4. An elbow as claimed in Claim 1, characterised in that the part of the perimeter of the inner conduit (3) of the elbow (1) occupied by the plurality of appendages or filaments (6) comprises an arch exceeding 90°.
